# EUROPÄISCHE PATENTSCHRIFT

(11) **EP 3 542 496 B1**
(45) Veröffentlichungstag und Bekanntmachung des Hinweises auf die Patenterteilung: **13.01.2021**
(21) Anmeldenummer: 17801025.2
(22) Anmeldetag: 06.11.2017
(51) Int. Cl.: H04L 12/28, H04L 12/12

(54) **SYSTEM UND VERFAHREN ZUR STEUERUNG VON GEBÄUDESYSTEMTECHNIK**
SYSTEM AND METHOD FOR CONTROLLING BUILDING SYSTEMS ENGINEERING
SYSTÈME ET PROCÉDÉ DE COMMANDE DE LA TECHNIQUE DES SYSTÈMES DE BÂTIMENTS

(30) Priorität: 15.11.2016 DE 102016222370
(43) Veröffentlichungstag der Anmeldung: 25.09.2019
(73) Patentinhaber: Tridonic GmbH & Co KG, 6851 Dornbirn (AT)
(72) Erfinder: BURTSCHER, Florian, 6850 Dornbirn (AT)
(74) Vertreter: Beder, Jens
(86) Internationale Anmeldenummer: PCT/EP2017/078323
(87) Internationale Veröffentlichungsnummer: WO 2018/091296

(56) Entgegenhaltungen:
- EP-A2- 2 639 780
- WO-A1-2015/054611
- DE-U1-202012 009 494

## Beschreibung

Die Erfindung betrifft ein System und ein Verfahren zur Steuerung und/oder Regelung von Gebäudesystemtechnik auf Basis von durch Sensoren erfassten Messwerten. Insbesondere ist ein System zur Steuerung und/oder Regelung von Gebäudesystemtechnik mittels einer mobilen Vorrichtung und einer verbesserten Ortsauflösung eines erzeugten Steuer- und Regelsignals gezeigt.

EP 2 639 780 A2 offenbart ein Bewegungs- oder Präsenz-Meldersystem mit einem Bewegungs- oder Präsenzmelder, der eine Ansteuer-, Verarbeitungs-, Speichereinrichtung aufweist, die mit einem PIR-Sensor, mit einer drahtlosen Netzwerk-Schnittstelle und mit einem anzusteuernden externen Gerät verbunden ist. Die Voraussetzung für eine Kommunikation zwischen dem Bewegungs- oder Präsenzmelder und einem Smart-Device mit installierter Applikation wird über mindestens eine drahtlose Übertragungsstrecke geschaffen.

WO 2015/054611 A1 zeigt intelligente Beleuchtungssysteme mit Beleuchtungskörpern, die kommunikativ mit Prozessoren und Speicher gekoppelt sind, um eine effiziente, reaktionsschnelle und maßgeschneiderte Beleuchtung bereitzustellen, die den Anforderungen und Vorlieben eines bestimmten Benutzers oder einer bestimmten Anwendung entspricht. Ein Gateway-Gerät bietet Konnektivität zur Verbindung von Beleuchtungskörpern mit der Cloud, um die Datenerfassung, -analyse und - beleuchtung zu gewährleisten. Konfigurationsprofile bieten zusammen mit der Identifikationserfassung objektspezifische und personenbezogene Lichtverhältnisse in Umgebungen mit intelligenten Beleuchtungssystemen. Konfiguration, Steuerung, Überwachung und Berichterstellung in Bezug auf intelligente Beleuchtungssysteme werden mit cloud-basierten und mobilen Apps im Vergleich zu herkömmlichen Beleuchtungssystemtechnologien vereinfacht.

Es ist bekannt Gebäudetechniksysteme, beispielsweise Beleuchtungssysteme, mittels verteilt in einem Gebäude angeordneten Sensoren, beispielweise Präsenzsensoren, zu steuern. Präsenzsensoren detektieren und melden in einem Sensorsignal an eine Steuerungseinheit die Präsenz einer oder mehrerer Personen in ihrem jeweiligen Erfassungsbereich. Die Gebrauchsmusterschrift DE 20 2012 009 494 U1 zeigt ein solches Gebäudetechniksystem mit einer zentralen Steuerungseinheit und einer Vielzahl von verteilt angeordneten Sensoren, umfassend beispielsweise Tastsensoren, Schalter, und Präsenzsensoren. Dabei hängt die räumliche Auflösung der Detektion einer Person von der Größe und der Anzahl unterscheidbarer Erfassungsbereiche sowie der räumlichen Anordnung der einzelnen Sensoren ab. Entsprechend der möglichen Auflösung einer Positionsinformation für eine Person können Steuer- und Regelsignale für die Ansteuerung der Gebäudesystemtechnik, beispielsweise von Leuchten, erzeugt werden.

Nachteilig ist, dass die Qualität der Detektion einer Person im Erfassungsbereich ausschließlich von der Art der verwendeten Sensoren und eine Ortsauflösung einer ermittelten Positionsinformation von der Anzahl der eingesetzten Präsenzsensoren abhängt. Eine sich nicht bewegende Person wird z.B. nach Ablauf einer voreingestellten Zeit durch einen Präsenzsensor, der im Wesentlichen auf Grundlage eines Bewegungsmelders funktioniert, nicht mehr erkannt.

Der Erfindung liegt daher die Aufgabe zugrunde, eine verbesserte Steuerung und Regelung eines Gebäudetechniksystems zu erreichen.

Die Aufgabe wird mit einem System, das die Merkmale des unabhängigen Anspruchs 1 aufweist, sowie einem Verfahren mit den entsprechenden Merkmalen gelöst.

Ein erfindungsgemäßes System zur Steuerung und/oder Regelung von Gebäudesystemtechnik auf Basis von durch Sensoren erfassten Messwerten umfasst eine mobile Vorrichtung, zumindest eine stationäre Sensoreinheit und eine Datenverarbeitungseinheit. Die mobile Vorrichtung, die zumindest eine stationäre Sensoreinheit und die Datenverarbeitungseinheit sind über mindestens ein Kommunikationsnetz verbunden. Das erfindungsgemäße System zeichnet sich dadurch aus, dass die mobile Vorrichtung wenigstens einen Sensor zur Erfassung eines Messwerts einer physikalischen Größe aufweist, und die Datenverarbeitungseinheit dafür eingerichtet ist, ein Steuer- und Regelungssignal für die Gebäudesystemtechnik auf Basis einer Kombination von Information über den erfassten Messwert (oder mehrere Messwerte) des Sensors der mobilen Vorrichtung und der zumindest einen stationären Sensoreinheit zu erzeugen. Das System zur Steuerung und/oder Regelung von Gebäudesystemtechnik verfügt über mindestens eine Einrichtung, die für eine Positionsbestimmung der mobilen Vorrichtung eine Referenzposition festlegt. Das System zur Steuerung und/oder Regelung von Gebäudesystemtechnik ist dadurch gekennzeichnet, dass die Datenverarbeitungseinheit und/oder die mobile Vorrichtung eingerichtet ist, eine Kalibrierung des Sensors der mobilen Vorrichtung mittels Informationen über die physikalisch erfasste Größe sowohl des Sensors der mobilen Vorrichtung als auch der stationären Sensoreinheit auszuführen.

Unter Kalibrierung des Sensors ist dabei auch eine Korrektur der aus den primär erfassten Daten des Sensors abgeleiteten Informationen bzw. eine Anpassung von Parametern im Verarbeitungsalgorithmus der erfassten Messwerte zu verstehen.

Die mobile Vorrichtung ist bevorzugt ein Smartphone, kann aber auch ein mobiler Computer, beispielsweise ein Notebook oder ein Tablet, sein. Ein Sensor oder eine Sensoreinheit kann eine einzelne physikalische Größe quantitativ und/oder qualitativ erfassen, oder mehrere physikalische Größe erfassen und entsprechend einer Vorschrift verarbeiten, um eine Information über die physikalisch erfasste Größe auszugeben.

Durch die erfindungsgemäße Kombination einer Information über die physikalisch erfasste Größe des Sensors der mobilen Vorrichtung mit Informationen über erfasste Messwert(e) der stationären Sensoreinheit ist die Erzeugung eines wesentlich präziser eine Situation berücksichtigendes Steuer- und Regelsignals möglich, ohne dass der Aufwand für die Installation von mehr stationären Sensoreinheiten und/oder Sensoreinheiten mit verbesserter Qualität zu allerdings höheren Kosten je Sensoreinheit notwendig wird. In mobilen Vorrichtungen wie Smartphones sind heutzutage bereits eine Vielzahl von Sensoren verbaut, die (gegebenenfalls vorverarbeitete) Sensordaten als Informationen zu Messwerten bereitstellen können. Diese Informationen können beispielsweise Rohdaten der Messwerte oder auch bereits vorverarbeitete Daten sein. Diese gemessenen Sensordaten sind einerseits unmittelbar als Messwerte, oder aber in vorverarbeiteter Form, möglicherweise auch bereits in Kombination miteinander, beispielsweise durch eine inertiale Messeinheit (englisch Inertial Measurement Unit, im Folgenden auch IMU), verfügbar. Das auf Grundlage einer Kombination von Information über die physikalisch erfasste Größe des Sensors der mobilen Vorrichtung und der stationären Sensoreinheit erzeugte Steuer- und Regelungssignal kann sowohl eine verbesserte Regelung des Gebäudetechniksystems ermöglichen, als auch die Möglichkeit eröffnen, die Auswertung der Messung der physikalischen Größe der mobilen Vorrichtung zu kalibrieren. Damit kann beispielsweise ein eine Temperatur, ein Luftdruck oder aber ein Startpunkt einer Folge von Positionswerten der IMU ebenso wie eine Drift der Folge von Positionswerten durch die Kombination der physikalisch erfassten Größe des Sensors mit der stationären Sensoreinheit bestimmt werden.

Eine Referenzposition kann beispielsweise an einer (oder besser jeder Tür des Gebäudes) Tür, an einem Gebäudeeingang mittels einer dort angebrachten Einrichtung, die eine Funkkommunikation oder lichtgestützte Kommunikation (englisch Visible Light Communication, abgekürzt: VLC) zwischen der türseitigen Einrichtung und der mobilen Vorrichtung ermöglicht, bereitgestellt werden. Ein solche Einrichtung kann beispielsweise einen RFID-Chip oder eine Funkbake nach einem Standard wie Bluetooth™ umfassen. Damit ist zum einen ein räumlicher definierter Startpunkt für eine IMU der mobilen Vorrichtung und eine zeitliche Synchronisation zwischen mobiler Vorrichtung und der Datenverarbeitungseinheit des erfindungsgemäßen Systems bereitgestellt. Zugleich kann an dieser Referenzposition mittels der Kommunikation zwischen einer gebäudeseitigen Referenzeinheit und der mobilen Vorrichtung eine Anwendung auf der mobilen Vorrichtung initialisiert und gestartet werden, die die Übermittlung der Information der physikalisch erfassten Größe des Sensors von der mobilen Vorrichtung zur Datenverarbeitungseinheit realisiert.

Bei einer IMU, wie sie beispielsweise in Smartphones eingesetzt wird, kann die Genauigkeit der ermittelten Position im Verlauf der Zeit geringer werden, da sich ein Fehler in der Positionsbestimmung mit zunehmender Integration der Messwerte erhöht. Das erfindungsgemäße Vorgehen ermöglicht mittels Erfassungsbereichsgrenzen stationärer Präsenzmelder entsprechende Abweichungen in der z.B. seitens der mobilen Vorrichtung ermittelten Positionen zu erkennen und die entsprechende Auswertung der IMU zu kalibrieren. Hierzu werden die Eintritte in den Erfassungsbereich des Bewegungsmelders mit der Positionsinformation zu diesem Zeitpunkt abgeglichen. Eine solche Kalibrierung ist natürlich auch mit anderen Sensoren, beispielsweise Temperatursensoren, möglich. Somit erfolgt nicht nur die Steuerung der Gebäudesystemtechnik präziser, sondern auch weitere Anwendungen, die auf von der IMU ermittelte Positionsinformation oder Temperaturinformationen, usw. zugreifen, profitieren von den so ermöglichten präziseren Informationen.

Die Unteransprüche definieren weitere vorteilhafte Ausgestaltungen der Erfindung.

Gemäß einer Ausgestaltung des Systems zur Steuerung und/oder Regelung von Gebäudesystemtechnik ist die zumindest eine stationäre Sensoreinheit eingerichtet, die Anwesenheit einer Person in zumindest einem Erfassungsbereich mittels einer Messung einer physikalischen Größe zu erkennen, also als Präsenzmelder zu funktionieren, und in einem Sensorsignal an die Datenverarbeitungseinheit zu übermitteln.

Die Verbindung zumindest eines stationären Präsenzmelders, der über ein Kommunikationsnetz mit der Datenverarbeitungseinheit verbunden ist, mit der von der mobilen Vorrichtung übermittelten Information über eine gemessene physikalische Größe der mobilen Vorrichtung ermöglicht die Verknüpfung einer ortsbezogen ermittelten Information der mobilen Vorrichtung mit der korrespondierenden ortsbezogenen Information ermittelt von der zumindest einen Sensoreinheit. Die Datenverarbeitungseinheit kann die begrenzte Ortsauflösung des Präsenzsensors mittels Kombination mit der physikalisch erfassten Größe des Sensors der mobilen Vorrichtung verbessern. Damit wird eine präzisere Steuerung eines Gebäudetechniksystems, beispielsweise einer Beleuchtung in einem Gebäude möglich. Damit werden Einsparpotentiale im Gebäudeunterhalt ebenso wie eine verbesserte Steuerung gemäß den Bedürfnissen von Nutzern des Gebäudes realisierbar. Die Kombination von Informationen von der stationären Sensoreinheit und der mobilen Vorrichtung kann auch in der Verwendung von Daten nur von der mobilen Vorrichtung oder der stationären Sensoreinheit bestehen, wenn die jeweils anderen Informationen nicht verfügbar sind.

Das System zur Steuerung und/oder Regelung von Gebäudesystemtechnik kann derart ausgebildet sein, dass die mobile Vorrichtung dafür eingerichtet ist, die Information über Messwerte (physikalisch erfasste Größen) des Sensors und/oder vorverarbeitete Messwerte als Information über die physikalisch erfasste Größe in einem Datensignal an die Datenverarbeitungseinheit zu übermitteln, wobei die Datenverarbeitungseinheit Teil der Gebäudesystemtechnik ist.

Damit kann eine zentral angeordnete Datenverarbeitungseinheit die Informationen sogar einer Mehrzahl von mobilen Vorrichtungen zur Erzeugung der Steuer- und Regelsignale nutzen, die damit auf einem nochmals dichteren Sensornetzwerk aufbauen und eine entsprechend präzisere Regelung und Steuerung ermöglichten. Zusätzlich ist eine zentrale Datenspeicherung zur Speicherung der Informationen für eine offline durchzuführende Analyse der so erzeugten Daten für das Gebäudetechniksystem möglich, um das Gebäudetechniksystem und dessen Betriebsparameter mittels bekannten Datenanalysewerkzeugen zu optimieren.

Das System zur Steuerung und/oder Regelung von Gebäudesystemtechnik nach einem Ausführungsbeispiel kann über eine Mehrzahl verteilt angeordnete stationäre Sensoreinheiten verfügen.

Insbesondere eine Vielzahl von über einen Einflussbereich eines Gebäudetechniksystems angeordneten stationären Sensoreinheiten, beispielsweise Temperatursensoren, Präsenzmelder, möglicherweise auch zu unterschiedlichen Teilsystemen, beispielsweise Klimatisierung oder Beleuchtung, gehörend, ermöglichen bei der Auswertung auf Grundlage einer Kombination mit Sensoren der mobilen Vorrichtungen, die Verbesserung des erzeugten Steuer- und Regelsignals auf Grundlage der Kombination der Information der stationären Sensoreinheiten und des mobilen Sensors gegenüber der jeweils möglichen Information allein auf Grundlage der stationären Sensoreinheiten oder allein der mobilen Einheit zu erhöhen.

In dem System zur Steuerung und/oder Regelung von Gebäudesystemtechnik kann die mobile Vorrichtung mit zumindest einem Sensor ausgerüstet sein, z.B. einem Bewegungssensor, insbesondere Beschleunigungssensor, Gyroskop-Sensor, Schwerkraftsensor, Rotationssensor umfassen.

Gemäß einer Ausführung ist der mindestens eine Sensor der mobilen Vorrichtung als Positionssensor, insbesondere als Satellitennavigationssystem-Empfänger, als Kompasssensor, als Annäherungssensor, als Orientierungssensor ausgeführt. Gemäß einer Ausführung des erfindungsgemäßen Systems ist der zumindest einen Sensor der mobilen Vorrichtung als Umgebungssensor, insbesondere als Drucksensor, als Helligkeitssensor, als Luftfeuchtigkeitssensor oder als Temperatursensor ausgebildet. Der Sensor kann auch als Kamerasensor, und/oder als Funksensor ausgebildet sein.

Die Vielzahl unterschiedlicher Sensoren der mobilen Vorrichtung in Verbindung mit den stationären Sensoreinheiten ermöglicht verbesserte Regelungen für Gebäudesystemtechniksysteme. So kann beispielsweise eine mobile Vorrichtung mit einem Helligkeitssensor in einem Raum mit einem stationären Temperatursensor eine wesentlich situationsgerechtere Steuerung von Klimatisierungsanlage, Heizungsanlage, Abschattungsystemen an Fenstern vornehmen, als dies allein des stationären Temperatursensors möglich wäre. So sind Sonneneinstrahlung und die Licht- und Wärmebedürfnisse eines Nutzers genauer zu erfassen und können entsprechend berücksichtigt werden.

Eine vorteilhafte Ausführung des Systems zur Steuerung und/oder Regelung von Gebäudesystemtechnik zeichnet sich dadurch aus, dass die zumindest eine stationäre Sensoreinheit zumindest einen der folgenden Sensoren Bewegungsmelder, Helligkeitssensor, Mikrofon, Kamerasensor und Temperatursensor umfasst, oder aber eine Kombination der vorstehend bezeichneten Sensoren.

Bevorzugt kann auch die Datenverarbeitungseinheit eingerichtet sein, eine Positionsinformation zur Position der mobilen Vorrichtung auf Basis der Kombination von Information über die physikalisch erfasste Größe des Sensors der mobilen Vorrichtung und der stationären Sensoreinheit zu erzeugen.

Die Erzeugung einer genauen Positionsinformation zur Position der mobilen Vorrichtung durch die kombinierte Auswertung der Information über die physikalisch erfasste Größe des Sensors der mobilen Vorrichtung und der stationären Sensoreinheit ermöglicht eine genauere Positionsbestimmung in einem Gebäude, als dies die Auswertung nur von Präsenzsensoren mit einem charakteristischen Erfassungsbereich von 3 bis 9 m allein ermöglicht. Damit wird eine genaue Positionsbestimmung der mobilen Vorrichtung innerhalb eines Gebäudes möglich, da insbesondere die für mobile Vorrichtungen übliche Positionsbestimmung mittels satellitengestützter Positionsbestimmungssysteme (GPS, GLONASS, COMPASS, GALILEO, ...) innerhalb geschlossener Gebäude nicht funktioniert.

Insbesondere ist es vorteilhaft, wenn das System zur Steuerung und/oder Regelung von Gebäudesystemtechnik die Datenverarbeitungseinheit dafür eingerichtet zeigt, mit dem Steuer- und Regelsignal Einheiten der Gebäudeinfrastruktur, insbesondere Leuchten, Lüftungsanlagen, Heizungsanlagen, Klimatisierungsanlagen, Alarmanlagen, Brandmeldeanlagen, anzusteuern.

Die Steuerung bzw. Regelung von Gebäudesystemtechnik kann dann besonders effizient erfolgen, wenn zeitrichtig Informationen über die gegenwärtige Nutzung eines Raums mit ermittelten Werten für physikalischen Größen wie Temperatur, Helligkeit, Luftfeuchte vorliegen. Die Kombination der von stationären Sensoreinheiten ermittelten Messwerte mit den seitens mobiler Vorrichtungen ermittelter Messwerte ermöglicht eine wesentlich präzisere Steuerung der Gebäudesystemtechnik. Beispielsweise kann die Auswertung unter Einbeziehung der mittels Mikrofonen der mobilen Vorrichtung ermittelten Personenzahl in einem Raum bereits vorbeugend die Belüftung des Raums anpassen, eine Heizungstemperatur absenken, bevor ein stationärer Temperatursensor ein entsprechendes Steuersignal auslöst. Da Mobiltelefone in der Regel von ihrem Nutzer mitgeführt werden, gibt die Information Aufschluss über den jeweiligen Messwert am Ort einer Person in dem Gebäude.

Die technische Aufgabe wird auch durch ein Verfahren zur Steuerung und/oder Regelung von Gebäudesystemtechnik auf Basis von durch Sensoren erfassten Messwerten in einem System umfassend eine mobile Vorrichtung, zumindest eine stationäre Sensoreinheit und eine Datenverarbeitungseinheit gelöst. Dabei sind die mobile Vorrichtung, die zumindest eine Sensoreinheit und die Datenverarbeitungseinheit über mindestens ein Kommunikationsnetz verbunden. Das Verfahren zeichnet sich dadurch aus, dass in einem Schritt des Erfassens die mobile Vorrichtung mit wenigstens einem Sensor eine physikalische Größe erfasst, und in einem Schritt der Signalerzeugung, die Datenverarbeitungseinheit ein Steuer- und Regelungssignal für das Gebäudetechniksystem auf Basis einer Kombination von Information über die physikalisch erfasste Größe des Sensors und der stationären Sensoreinheit erzeugt. Das System zur Steuerung und/oder Regelung von Gebäudesystemtechnik verfügt über mindestens eine Einrichtung, die für eine Positionsbestimmung der mobilen Vorrichtung eine Referenzposition festlegt. Das Verfahren zur Steuerung und/oder Regelung von Gebäudesystemtechnik ist dadurch gekennzeichnet, dass eine Kalibrierung des Sensors der mobilen Vorrichtung mittels Informationen über die physikalisch erfasste Größe sowohl des Sensors der mobilen Vorrichtung als auch der stationären Sensoreinheit durch die Datenverarbeitungseinheit und/oder die mobile Vorrichtung ausgeführt wird.

Weitere Ziele, Vorteile, Merkmale und Anwendungsmöglichkeiten der Erfindung ergeben sich aus der nachfolgenden Beschreibung eines Ausführungsbeispiels anhand der beiliegenden Figuren. Dabei können alle beschriebenen Merkmale für sich oder in beliebiger Kombination den Gegenstand der in den anhängenden Ansprüchen definierten Erfindung bilden. Es zeigen
- Fig. 1: eine Ausführung des erfindungsgemäßen Systems zur Steuerung und/oder Regelung von Gebäudesystemtechnik auf Basis von durch Sensoren erfassten Messwerten, und
- Fig. 2: ein Nutzungsszenario einer Ausführung des erfindungsgemäßen Systems zur Ermittlung einer Positionsinformation.

In den Figuren zeigen gleiche Bezugszeichen gleiche oder ähnliche Merkmale. Auf eine wiederholende Erläuterung gleicher Bezugszeichen wird zugunsten einer knappen und klaren Darstellung weitgehend verzichtet.

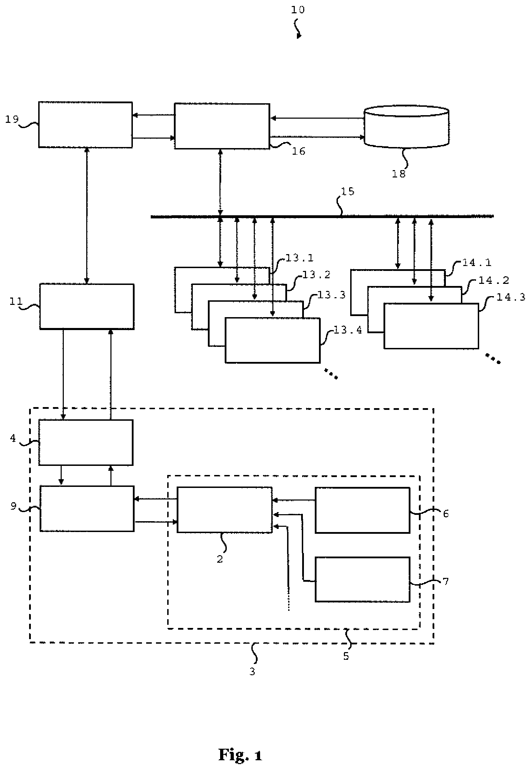

In Figur 1 ist eine Ausführung des erfindungsgemäßen Systems zur Ermittlung einer Positionsinformation mit einer mobilen Vorrichtung 3 als Blockschaltbild dargestellt. Die dargestellte mobile Vorrichtung umfasst einen Sensor 5, der mehrere Einzelsensoren 6, 7 und eine Sensorsignalverarbeitungseinheit 8 umfasst.

Ein Sensor 5, auch als Detektor, Messaufnehmer oder Messfühler bezeichnet, ist ein technisches Bauteil, das physikalische Eigenschaften, z. B. Wärmemenge, Temperatur, Feuchtigkeit,

Druck, Schallfeldgrößen, Helligkeit, Beschleunigung seiner Umgebung qualitativ und als Messgröße quantitativ erfassen kann. Diese Größen werden mittels physikalischer Effekte erfasst und in ein verarbeitbares elektrisches Signal umgeformt. Damit ist der Messaufnehmer das erste Element einer Messkette. Der Sensor 5 kann zusätzlich zum eigentlichen Einzelaufnehmer 6, 7 teilweise weitere Elemente einer Messkette umfassen, die aus dem elektrischen Sensorsignal, oder aus mehreren elektrischen Sensorsignalen ein Datensignal erzeugen, das eine Information über die physikalisch erfasste Größe des Sensors 5 enthält.

Sensoren 5 in mobilen Vorrichtungen 3 lassen sich in drei Untergruppen zusammenfassen:
- Bewegungssensoren, die Beschleunigungskräfte und Rotationskräfte in Bezug auf in drei Raumrichtungen x, y, z messen,
- Umgebungssensoren messen verschiedene Größen, die mit der Umgebung in Verbindung gebracht werden können, beispielsweise Temperatur oder Luftdruck,
- Positionssensoren, um eine Position der mobilen Vorrichtung 3 ermitteln, was eine Verarbeitung der Daten der Bewegungssensoren bedeuten kann.

Sensoren 5 im Sinne der Erfindung sind entweder über die Hardware als direkt messende Sensoren, oder über Software realisiert. Die hardwarebasierten Sensoren sind physikalisch in der mobilen Vorrichtung 3 eingebaut und können verschiedene Größen, wie z.B. Beschleunigungswerte der mobilen Vorrichtung und Luftfeuchtigkeit der Umgebung direkt messen. Die softwarebasierten Sensoren 5 greifen auch auf Informationen von hardwarebasierten Sensoren 5 zurück und können daher als virtuelle Sensoren 5 aufgefasst werden. Virtuelle Sensoren verwenden entweder einen oder mehrere hardwarebasierte Sensoren 5 und kombinieren deren erfassten Größen mit Hilfe von Algorithmen, die adaptierbare Parameter aufweisen können, so dass als Ergebnis des Algorithmus eine neue (virtuelle) Messgröße entsteht.

Im Folgenden werden einige typische Sensoren 5 kurz dargestellt, die in der mobilen Vorrichtung 3, insbesondere wenn dies als Smartphone oder Tablet ausgebildet ist, verfügbar sein können.

Ein Beschleunigungssensor misst die Beschleunigungskräfte, die auf das Gerät einwirken. Bei Smartphones werden häufig Mikro-Elektro-Mechanische Systeme eingesetzt (englisch: Micro Electro-Mechanical Systems, abgekürzt MEMS). Die Vorteile von MEMS-Sensoren sind eine geringe Baugröße, günstige Anschaffung, und Robustheit.

Ein Gyrosensor misst die Rotationsgeschwindigkeit um eine Achse im Raum. Dies kann für alle drei Raumachsen erfolgen. Der auch als Gyroskop bezeichnete Drehratensensor macht sich den Coriolis-Effekt zunutze.

Ein Magnetfeldsensor misst das geologische Magnetfeld der Erde. Der Magnetfeldsensor nutzt den Hall-Effekt. Um ein Magnetfeld im Raum festzustellen, sind in eiern mobilen Vorrichtung drei Magnetfeldsensoren eingesetzt, die im rechten Winkel zueinander angeordnet sind.

Ein barometrischer Sensor (Barometer) ermittelt den Luftdruck in der Atmosphäre. Mit den Messdaten des Barometers, dem Luftdruck der Meereshöhe und den aktuellen Wetterinformationen kann festgestellt werden, in welcher Höhe sich der Sensor 5 befindet. Ein solcher Sensor kann in Gebäuden insbesondere Informationen über die Position in Bezug auf die Stockwerke liefern. Verschiedene Faktoren wie Ausgangshöhe, Schwerkraft am aktuellen Ort und die von der Temperatur abhängige Dichte der Luft sind dabei zu berücksichtigen.

Ein Lichtsensor misst eine Lichtintensität in der Umgebung.

Ein RGB-Sensor ist im Wesentlichen eine Fotodiode mit einem Farbfilter, der die Beleuchtungsstärke und die Farbtemperatur von Lichtquellen aufnehmen kann.

Ein Annäherungssensor wird verwendet, um festzustellen, ob sich ein Objekt vor einem Bildschirm einer mobilen Vorrichtung 3 befindet. Mit Infrarotstrahlen misst der Annäherungssensor in welcher Entfernung von dem Bildschirm sich ein Objekt befindet.

Smartphones weisen häufig zwei Kameras als optische Sensoren auf, eine an der Vorderseite und eine an der Rückseite.

Als akustische Sensoren 5 könne Mikrofone, beispielsweise in MEMS-Technologie genutzt werden.

Ein Sensor 5 für die Umgebungstemperatur kann zusammen oder alternativ zu einem Sensor für Luftfeuchtigkeit in der mobilen Vorrichtung 3 vorhanden sein.

Im Rahmen einer Vorverarbeitung können die physikalisch erfassten Größen mehrerer elementarer Sensoren 6, 7 miteinander verknüpft oder gemeinsam ausgewertet werden, um eine weitere Information über physikalisch erfasste Größen zu erzeugen. Ziel der Verknüpfung der Daten mehrerer Sensoren 5, 6, 7 ist es, die Qualität der Information zu erhöhen oder eine neue Information basierend auf den aufgenommenen physikalischen Größen der elementaren Sensoren 6, 7 zu erzeugen.

Beispielsweise kann ein linearer Beschleunigungssensor mittels Software mit einer Kombination aus einem Beschleunigungssensor und einem Gyrosensor implementiert werden. Dieser virtuelle Sensor gibt die Beschleunigung der mobilen Vorrichtung 3 um die Effekte der Gravitation bereinigt zurück.

Ein Gravitationssensor kann ebenfalls wie der lineare Beschleunigungssensor über den Beschleunigungssensor und den Gyrosensor verwirklicht werden. Der Gravitationssensor gibt die Richtung und Stärke der Gravitation in Bezug auf das Koordinatensystem der mobilen Vorrichtung zurück.

Ein Positionsbestimmungssensor kann mittels Satellitennavigationsverfahren oder mittels IMU eine Position im dreidimensionalen Raum bestimmen. Äußere Störeinflüsse wie Wolken, Gebäude oder andere Hindernisse beinträchtigen Satellitennavigationsverfahren. Ebenfalls sind Positionsbestimmungsverfahren die auf WLAN oder VLC zurückgreifen bekannt. Die Berechnung der Position ist rechenintensiv und wirkt sich auf ein Energiemanagement der mobilen Vorrichtung 3 negativ aus.

In Figur 1 ist eine Steuereinheit 9 der mobilen Vorrichtung 3 gezeigt, beispielsweise ein Prozessor, der ein oder mehrere Datensignale des Sensors 5 erhält und über eine Sende-/Empfangseinrichtung 4 der mobilen Vorrichtung 3 an eine stationäre Sende-/Empfangseinrichtung 11 des Gebäudeinfrastruktursystems 10 übermittelt. Die Übertragung kann über einen Kommunikationsstandard für Funksysteme, insbesondere aber nicht ausschließlich WLAN, Bluetooth aber auch GSM, UMTS, LTE, CDMA und deren Erweiterungen, oder lichtgestützte Kommunikation wie VLC erfolgen. Insbesondere Smartphones und mobile Computer verfügen als mobile Vorrichtungen 3 oft über mehrere Sende-/Empfangseinrichtungen 11 nach den genannten Standards.

Das Gebäudetechniksystem 10 ist in Figur 1 als Beleuchtungssystem 10 dargestellt, dessen Komponenten über eine Busverbindung 12, beispielsweise nach dem DALI™- Standard miteinander kommunizieren. Andere Standards für Gebäudesystemtechnik sind im Rahmen der Erfindung ebenso möglich. Das Gebäudetechniksystem wird in der Regel weitere Einheiten wie Heizung und Klimatisierungssubsysteme usw. umfassen. Das gezeigte Beleuchtungs(sub)system 10 umfasst weiter über eine Mehrzahl von in dem auszuleuchtenden Bereich verteilt angeordnete Leuchten 13.1, 13.2, ..., 13.4 und Präsenzsensoren 14.1, ..., 14.3, die ebenfalls über die Busverbindung 12 mit einer Datenverarbeitungseinheit 16 des Beleuchtungssystems 10 kommunizieren können. Die Präsenzsensoren 14.1, ..., 14.3 sind stationäre Sensoreinheiten, die beispielsweise Bewegungen in einem jeweiligen Erfassungsbereich detektieren und an die Datenverarbeitungseinheit 16 übermitteln. Die Datenverarbeitungseinheit 16 erzeugt Steuer- und Regelsignale für die Ansteuerung der Leuchten 13.1, 13.2, ..., 13.4 auf Grundlage der stationären Sensoreinheiten 14.1, ..., 14.3 in Kombination mit Information über physikalisch erfasste Größen des Sensors 5 der mobilen Vorrichtung 3. Die Datenverarbeitungseinheit 16 kann auch eine zentrale Recheneinheit, die mit dem Beleuchtungssystem 10 und/oder anderen Subsystemen über eine geeignete Schnittstelle kommuniziert.

Für die Erfindung ist es dabei nicht entscheidend, ob die Erzeugung der Steuer- und Regelsignale in der in Figur 1 dargestellten Datenverarbeitungseinheit 16 des Beleuchtungssystems 10 ausgeführt wird. Die Erzeugung von Steuer- und Regelsignale könnte sogar in der mobilen Vorrichtung 3 erfolgen, ohne dass von der erfindungsgemäßen Erzeugung der Steuer- und Regelsignale auf Grundlage einer Kombination von Information über eine mittels des Sensors 5 erfasste physikalische Größe und der Messung eines physikalischen Parameters durch die stationäre Sensoreinheiten 14.1, ..., 14.3 abgewichen wird. In diesem Fall müssten allerdings die gebäudeseitig erzeugten Informationen zu der mobilen Vorrichtung übertragen werden.

Die Datenverarbeitungseinheit 16 ist in Figur 1 mit einem Datenspeichereinheit 18 verbunden, in dem sie die erfindungsgemäß erzeugten Steuer- und Regelsignale oder Informationen zu Messwerten zeit- und/oder ortsaufgelöst speichern kann. Damit wird eine zeitversetzte Auswertung, insbesondere auch mit den Eingangsgrößen umfassend die Information über physikalisch erfasste Größen des Sensors 5 und der Sensoreinheiten 14.1, ..., 14.3 möglich. Eine Analyse des Steuer- und Regelverhaltens und/oder eines Nutzerverhaltens mit dem Ziel einer anschließenden Optimierung von Parametern des Gebäudeinfrastruktursystems ist somit möglich, beispielsweise um die Betriebskosten des Systems verringern oder die Bedingungen für die Nutzer zu verbessern.

Eine inertiale Messeinheit oder IMU der mobilen Vorrichtung 3 ist eine Kombination mehrerer Inertialsensoren, beispielsweise Beschleunigungssensoren und Drehratensensoren. Insbesondere werden von einer IMU Beschleunigungswerte und Lageveränderungwerte jeweils relativ zu einer Gravitationsgeraden ermittelt.

Inertiale Messeinheiten sind häufig Bestandteile, aufgrund räumlicher Restriktionen in einfacher Ausführung, von mobilen Kommunikationsgeräten wie Smartphones und mobilen Computern, beispielsweise Tablets. Damit sind IMUs bevorzugte Ausbildungen für den Sensor 5 im Rahmen der vorliegenden Erfindung.

Zur Erfassung von Messwerten in Bezug auf die sechs möglichen kinematischen Freiheitsgrade verfügt eine IMU über drei orthogonal angeordnete Beschleunigungssensoren (Translationssensoren) für die Erfassung der translatorischen Bewegung in x- bzw. y- bzw. z-Achse und drei orthogonal zueinander angebrachten Drehratensensoren (gyroskopische Sensoren) für die Erfassung rotierender (kreisender) Bewegungen in x- bzw. y- bzw. z-Achse. Eine IMU liefert als Messwerte drei lineare Beschleunigungswerte für die translatorische Bewegung und drei Winkelgeschwindigkeiten für die Drehraten. In einem Trägheitsnavigationssystem (englisch: Interial Navigation System, abgekürzt INS) wird aus den Messwerten der IMU für die linearen Beschleunigungen, nach Kompensation der Erdbeschleunigung, durch Integration die lineare Geschwindigkeit und durch weitere Integration der Geschwindigkeit die Position im Raum bezogen zu einem Referenzpunkt ermittelt. Die Integration der drei Winkelgeschwindigkeiten liefert, bezogen auf einen Referenzpunkt, eine Orientierung im Raum.

Zum Bestimmen der Integrationskonstanten, zur Verbesserung der Genauigkeit und um die Drift der oben genannten Sensoren zu korrigieren, können bei IMUs zusätzliche Magnetfeldsensoren und Satellitennavigations-Sensoren, eigentlich Satellitennavigationsempfänger, integriert werden.

Sobald das Smartphone die initiale Position des Nutzers durch GPS, WiFi, mobile Daten erkannt, oder einen an einen bekannten Punkt montierten Referenzgeber hat können die Messwerte ermittelt durch die IMU Sensoren genutzt werden, um einen zurückgelegten Weg oder Pfad des Nutzers abzuschätzen und so seine relative Position zum Referenzpunkt aufzugeben.

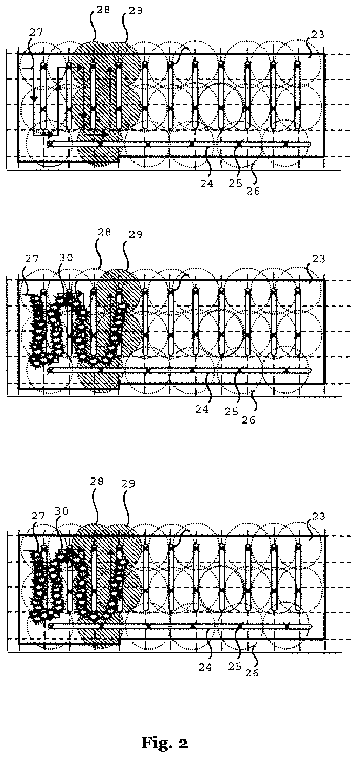

In Fig. 2 wird ein Nutzungsszenario des erfindungsgemäßen Systems zur Ermittlung einer Positionsinformation in einem Raum erläutert.

Die obere Teilfigur 2 zeigt einen Raum 23 in einem Grundriss. In dem Raum 23 wird eine Beleuchtung über deckenmontierte Leuchten 24 bereitgestellt, die über Präsenzsensoren 25 (PIR Sensoren) gemeinsam oder einzeln ein- und ausgeschaltet und ggf. gedimmt werden können. Die Präsenzsensoren 25 haben jeweils einen bekannten Erfassungsbereich 26, innerhalb dessen der mittig in dem kreisförmigen Erfassungsbereich 26 angeordnete Präsenzsensor 25 die Anwesenheit einer Person erkennt.

Dieser grundsätzliche Aufbau des Raums 23 ist in der oberen, der mittleren und der unteren Teilfigur 2 jeweils gleich.

In der oberen Teilfigur 2 bewegt sich eine Person, die die mobile Vorrichtung 3 mitführt, auf dem Pfad 27 durch den Raum 23. Eine Bestimmung der Positionsinformation der Person ist in der oberen Teilfigur 2 mit einer ersten Genauigkeit möglich, die der Auflösung der einzelnen Erfassungsbereiche 26 der Präsenzsensoren 25 entspricht. Über die Erhöhung der Anzahl der Präsenzsensoren 25 und eine gemeinsame Auswertung in der Datenverarbeitungseinheit 16 ließe sich die erste Genauigkeit erhöhen. Der installationsseitige Aufwand über den gesamten Raum 23 würde aber steigen und würde über ein gesamtes Gebäude entsprechend hoch.

Mit dem in Figur 2 dargestellten Beleuchtungssystem können zwar Bewegungen der Person erkannt werden, für eine personenbezogene Helligkeitsverteilung innerhalb geschlossener Räume sind die ermittelten Daten jedoch von zu geringer Genauigkeit. Der Erfassungsbereich 26, in dem Bewegungen erkannt werden, ist mit einem Durchmesser von üblicherweise 4 bis 9 m relativ groß und umfasst normalerweise den Bereich mehrerer dimmbarer Leuchten. Bewegt sich die Person nur innerhalb des Erfassungsbereichs 26 eines Präsenzsensors 25, kann kein Bewegungspfad für die Person erstellt und die Helligkeit entsprechend angepasst werden. Bewegen sich mehrere Personen in dem Raum 23, so ist die Zuordnung auf einzelne Personen nicht möglich oder führt zu falschen Ergebnissen.

In der oberen Teilfigur 2 sind die Erfassungsbereiche 26, die die Person zuletzt auf dem Pfad 27 durchquerte, schraffiert dargestellt.

Auch in der mittleren Teilfigur 2 bewegt sich eine Person, nun mit der mobilen Vorrichtung 3 auf dem Pfad 27 durch den Raum 23. Zur Ermittlung des Pfads wurden hier aber Sensordaten der mobilen Vorrichtung 3 ausgewertet.

Die Auswertung der Daten der mobilen Vorrichtung 3 erzeugt eine Pfadspur 30 aus einer Sequenz von mittels Sensordaten erzeugten Positionsinformationen. Beispielsweise werden gemessene Daten eines Beschleunigungssensors und eines Orientierungssensors zusammen verarbeitet. Der Orientierungssensor kann mittels Software durch Fusion gemessener Daten eines Magnetfeldsensors, eines Beschleunigungssensors und eines Gyrosensors realisiert werden. Aus den gemessenen Daten des Beschleunigungssensors werden die Schritte der Testperson extrahiert. Es wird ein Betrag aus allen drei Achsen des Beschleunigungssensors gebildet, weil mögliche Fehler je Lage der mobilen Vorrichtung 3 im Raum zu kompensieren sind.

Insbesondere die Messung des Magnetfelds kann allerdings durch Störeinflüsse, beispielsweise Monitore, Rohre im Raum 23 verfälscht werden.

Eine Richtungsinformation wird aus den gemessenen Werten des Orientierungssensors ermittelt.

Mit den ermittelten Daten des Bewegungssensors und Orientierungssensors wird eine Pfadspur 30 in der mobilen Vorrichtung 3 oder der Datenverarbeitungseinheit 16 bestimmt, die dem tatsächlichen Pfad 27 der Person im Raum 23 vergleichsweise genau folgt. Gegen Ende der Pfadspur 30 ist eine deutliche Abweichung der Pfadspur 30 von dem tatsächlichen Pfad 27 erkennbar. Eine solche Abweichung ist für die vergleichsweise einfach aufgebauten, kompakten IMUs ohne mechanisch aufwändige kardanischen Aufhängung und deren Ansteuerung typisch, womit nur geringere Anforderungen an die Genauigkeit und Langzeitstabilität erfüllt werden können. Eine Drift der Positionsinformation allein aufgrund von Daten der IMU würde in dem in der mittleren Teilfigur 2 dargestellten Fall dazu führen, dass die starke Abweichung der allein mittels der Daten der mobilen Vorrichtung 3 ermittelten Pfadspur 30 von dem tatsächlichen Pfad 27 in den Erfassungsbereich 29 nicht erkannt wird, obwohl die Pfadspur 30 eine sehr viel genauere Verfolgung des Pfads 27 der Person mit der mobilen Vorrichtung 3 ermöglicht. Dies ist in der mittleren Teilfigur 2 dadurch dargestellt, dass der nicht durch die ermittelte Pfadspur 30 berührte Erfassungsbereich 28 nicht schraffiert dargestellt ist, während alle anderen Erfassungsbereiche 29 , die von der auf Grundlage der Informationen der mobilen Vorrichtung 3 ermittelten Pfadspur 30 berührt werden, schraffiert dargestellt sind. Ein Regel- und Steuersignal auf Grundlage der Pfadspur 30 allein würde daher die Beleuchtung des Raums 23 nicht situationsgerecht steuern.

Anhand der unteren Teilfigur 3 werden die Vorteile des erfindungsgemäßen Vorgehens für die Ermittlung einer Positionsinformation für die mobile Vorrichtung 3 deutlich.

Die Person bewegt sich mit einer mobilen Vorrichtung 3 auf dem Pfad 27 durch den Raum 23. Erfindungsgemäß erzeugt die Datenverarbeitungseinheit 16 ein Steuer- und Regelungssignal für das Beleuchtungssystem 10 auf Basis einer Kombination von Information über die physikalisch erfassten Größen der IMU als Sensor der mobilen Vorrichtung 3 und der stationären Präsenzsensoren 25. Damit wird die starke Abweichung des ermittelten Pfads 30 von dem Pfad 27 der Person durch den Raum 23 durch die gemeinsame Auswertung im Rahmen der Erzeugung des Steuer- und Regelungssignals für die Beleuchtung 24 berücksichtigt, da die ermittelten Werte der stationären Präsenzsensoren 25 eben in die Erzeugung des Steuer- und Regelungssignals eingehen. Die Kombination der Information über die seitens des Sensor 5 ermittelte physikalische Größe, hier exemplarisch anhand der IMU dargestellt, mit den Werten der Präsenzsensoren 25 ermöglicht es, eine verbesserte Positionsinformation mit einer zweiten Positionsgenauigkeit zu ermitteln. Die zweite Positionsgenauigkeit ist dabei größer als die erste Positionsgenauigkeit, die eine Genauigkeit einer allein auf Grundlage der Präsenzsensoren 25 ermittelten Positionsinformation für die mobile Vorrichtung 3 beschreibt.

In der unteren Teilfigur 2 ist das Ergebnis der gemeinsame Auswertung dadurch berücksichtigt, dass der Erfassungsbereich 28 des Präsenzsensors schraffiert dargestellt ist, da dieser Präsenzsensor 25 die Person auf dem Pfad 27 detektiert.

Neben der Bestimmung der Position in einer Ebene ist auch, ergänzend oder einzeln ausgewertet, die Ermittlung eines Stockwerks möglich. Dazu können Daten eines Luftdrucksensors allein oder in Kombination mit der IMU ausgewertet werden. Insbesondere in offenen, über mehrere Stockwerke verlaufende Treppenhäusern ist eine solche Auswertung hilfreich.

## Patentansprüche

1. System zur Steuerung und/oder Regelung von Gebäudesystemtechnik auf Basis von sensorisch erfassten Messwerten, umfassend eine mobile Vorrichtung (3), zumindest eine stationäre Sensoreinheit (14.1, 14.2, 14.3) und eine Datenverarbeitungseinheit (16),
wobei die mobile Vorrichtung (3), die zumindest eine stationäre Sensoreinheit (14.1, 14.2, 14.3) und die Datenverarbeitungseinheit über mindestens ein Kommunikationsnetz (15) verbunden sind,
die mobile Vorrichtung (3) wenigstens einen Sensor (5) zur Erfassung eines Messwerts hat, und
die Datenverarbeitungseinheit (16) eingerichtet ist, ein Steuer- und Regelungssignal für die Gebäudesystemtechnik auf Basis einer Kombination von Information über die erfassten Messwerte des zumindest einen Sensors (5) und der zumindest einen stationären Sensoreinheit (14.1, 14.2, 14.3) zu erzeugen, und wobei
das System über mindestens eine Einrichtung verfügt, die ausgelegt ist, für eine Positionsbestimmung der mobilen Vorrichtung (3) eine Referenzposition festzulegen, und
**dadurch gekennzeichnet,**
**dass** die Datenverarbeitungseinheit (16) und/oder die mobile Vorrichtung (3) eingerichtet ist, eine Kalibrierung des Sensors (5) der mobilen Vorrichtung auf Basis der Kombination von Information über die erfassten Messwerte des Sensors (5) und der stationären Sensoreinheit (14.1, 14.2, 14.3) auszuführen.

2. Das System zur Steuerung und/oder Regelung von Gebäudesystemtechnik nach Anspruch 1,
**dadurch gekennzeichnet,**
**dass** die zumindest eine stationäre Sensoreinheit (14.1, 14.2, 14.3) eingerichtet ist, die Anwesenheit einer Person in zumindest einem Erfassungsbereich (26) mittels einer Messung eines physikalischen Parameters zu erkennen und in einem Sensorsignal an die Datenverarbeitungseinheit (16) zu übermitteln.

3. Das System zur Steuerung und/oder Regelung von Gebäudesystemtechnik nach einem der Ansprüche 1 und 2,
**dadurch gekennzeichnet,**
**dass** die mobile Vorrichtung (3) eingerichtet ist, die Information des Sensors (5) und/oder vorverarbeitete Information über den erfassten Messwert des Sensors (5) in einem Datensignal an die Datenverarbeitungseinheit (16) zu übermitteln und die Datenverarbeitungseinheit (16) Teil der Gebäudesystemtechnik ist.

4. Das System zur Steuerung und/oder Regelung von Gebäudesystemtechnik nach einem der Ansprüche 1 bis 3,
**dadurch gekennzeichnet,**
**dass** das System über eine Mehrzahl verteilt angeordneter stationäre Sensoreinheiten (14.1, 14.2, 14.3) verfügt und die Erfassung der Messwerte ortsaufgelöst erfolgt.

5. Das System zur Steuerung und/oder Regelung von Gebäudesystemtechnik nach einem der Ansprüche 1 bis 4,
**dadurch gekennzeichnet,**
**dass** die mobile Vorrichtung (3) zumindest einen Sensor (5) hat, der als Bewegungssensor, insbesondere Beschleunigungssensor, Gyroskop-Sensor, Schwerkraftsensor, Rotationssensor,
als Positionssensor, insbesondere als Satellitennavigationssystemempfänger, Kompasssensor, Annäherungssensor, Orientierungssensor,
als Umgebungssensor, insbesondere als Drucksensor, Helligkeitssensor, Luftfeuchtigkeitssensor, Temperatursensor,
als Mikrofon,
als Kamerasensor,
oder als Funksensor ausgebildet ist.

6. Das System zur Steuerung und/oder Regelung von Gebäudesystemtechnik nach einem der Ansprüche 1 bis 5,
**dadurch gekennzeichnet,**
**dass** die zumindest eine stationäre Sensoreinheit (14.1, 14.2, 14.3) zumindest einen Präsenzsensor, Bewegungsmelder, Helligkeitssensor, Mikrofon, Kamerasensor oder Temperatursensor umfasst.

7. Das System zur Steuerung und/oder Regelung von Gebäudesystemtechnik nach einem der Ansprüche 1 bis 6,
**dadurch gekennzeichnet,**
**dass** die Datenverarbeitungseinheit (16) eingerichtet ist, eine Positionsinformation bezüglich der Position der mobilen Vorrichtung (3) auf Basis der Kombination von Information über die erfassten Messwerte des Sensors (5) und der stationären Sensoreinheit (14.1, 14.2, 14.3) zu erzeugen.

8. Das System zur Steuerung und/oder Regelung von Gebäudesystemtechnik nach einem der Ansprüche 1 bis 7,
**dadurch gekennzeichnet,**
**dass** die Datenverarbeitungseinheit (16) eingerichtet ist, mit dem Steuer- und Regelsignal einen oder mehrere Einheiten der Gebäudeinfrastruktur (13.1, 13.2, 13.3, 13.4), insbesondere eine oder mehrere Leuchten, eine Lüftungsanlage, eine Heizungsanlage, eine Klimatisierungsanlage, eine Alarmanlage, eine Brandmeldeanlage, anzusteuern.

9. Verfahren zur Steuerung und/oder Regelung von Gebäudesystemtechnik auf Basis von durch Sensoren erfassten Messwerten in einem System, wobei das System eine mobile Vorrichtung (3), zumindest eine stationäre Sensoreinheit (14.1, 14.2, 14.3) und eine Datenverarbeitungseinheit (16) umfasst,
wobei die mobile Vorrichtung (3), die zumindest eine Sensoreinheit (14.1, 14.2, 14.3) und die Datenverarbeitungseinheit (16) über mindestens ein Kommunikationsnetz (15) verbunden sind, und das Verfahren
in einem Schritt des Erfassens, die mobile Vorrichtung (3) mit wenigstens einem Sensor (5) einen oder mehrere Messwerte erfasst, und
in einem Schritt der Signalerzeugung, die Datenverarbeitungseinheit (16) ein Steuer- und Regelungssignal für die Gebäudesystemtechnik auf Basis einer Kombination von Information über die erfassten Messwerte des Sensors (5) und der zumindest einen stationären Sensoreinheit (14.1, 14.2, 14.3) erzeugt, und wobei das Verfahren mittels mindestens einer Einrichtung für eine Positionsbestimmung der mobilen Vorrichtung (3) eine Referenzposition festlegt, und
**dadurch gekennzeichnet,**
**dass** das Verfahren eine Kalibrierung des Sensors (5) der mobilen Vorrichtung auf Basis der Kombination von Information über die erfassten Messwerte des Sensors (5) und der stationären Sensoreinheit (14.1, 14.2, 14.3) durch die Datenverarbeitungseinheit (16) und/oder die mobile Vorrichtung (3) auszuführt.

## Claims

1. System for controlling and/or regulating building systems engineering on the basis of sensor-detected measured values, comprising a mobile device (3), at least one stationary sensor unit (14.1, 14.2, 14.3), and a data processing unit (16),
wherein the mobile device (3), the at least one stationary sensor unit (14.1, 14.2, 14.3), and the data processing unit are connected via at least one communication network (15),
the mobile device (3) has at least one sensor (5) for detecting a measured value, and
the data processing unit (16) is configured to generate a control and regulation signal for the building systems engineering on the basis of a combination of information about the detected measured values of the at least one sensor (5) and of the at least one stationary sensor unit (14.1, 14.2, 14.3), and wherein
the system has at least one device which is designed to determine a reference position for a position determination of the mobile device (3), and
**characterized in that**
the data processing unit (16) and/or the mobile device (3) is configured to perform a calibration of the sensor (5) of the mobile device on the basis of the combination of information about the detected measured values of the sensor (5) and of the stationary sensor unit (14.1, 14.2, 14.3).

2. System for controlling and/or regulating building systems engineering according to Claim 1,
**characterized in that**
the at least one stationary sensor unit (14.1, 14.2, 14.3) is configured to detect the presence of a person in at least one detection region (26) by means of a measurement of a physical parameter, and to transmit it in a sensor signal to the data processing unit (16).

3. System for controlling and/or regulating building systems engineering according to any of Claims 1 and 2,
**characterized in that**
the mobile device (3) is configured to transmit the information of the sensor (5) and/or preprocessed information about the detected measured value of the sensor (5) to the data processing unit (16) in a data signal, and the data processing unit (16) is part of the building systems engineering.

4. System for controlling and/or regulating building systems engineering according to any of Claims 1 to 3,
**characterized in that**
the system has a plurality of distributed stationary sensor units (14.1, 14.2, 14.3), and the measured values are detected in a spatially resolved manner.

5. System for controlling and/or regulating building systems engineering according to any of Claims 1 to 4,
**characterized in that**
the mobile device (3) has at least one sensor (5) which is formed as a motion sensor, especially an acceleration sensor, gyroscopic sensor, gravity sensor, rotation sensor,
as a position sensor, especially as a satellite navigation system receiver, compass sensor, proximity sensor, orientation sensor,
as an ambient sensor, especially as a pressure sensor, brightness sensor, humidity sensor, temperature sensor,
as a microphone,
as a camera sensor,
or as a radio sensor.

6. System for controlling and/or regulating building systems engineering according to any of Claims 1 to 5,
**characterized in that**
the at least one stationary sensor unit (14.1, 14.2, 14.3) comprises at least one presence sensor, motion detector, brightness sensor, microphone, camera sensor, or temperature sensor.

7. System for controlling and/or regulating building systems engineering according to any of Claims 1 to 6,
**characterized in that**
the data processing unit (16) is configured to generate position information relating to the position of the mobile device (3) on the basis of the combination of information about the detected measured values of the sensor (5) and of the stationary sensor unit (14.1, 14.2, 14.3).

8. System for controlling and/or regulating building systems engineering according to any of Claims 1 to 7,
**characterized in that**
the data processing unit (16) is configured to control, via the control and regulation signal, one or more units of the building infrastructure (13.1, 13.2, 13.3, 13.4), especially one or more lamps, a ventilation system, a heating system, an air conditioning system, an alarm system, or a fire alarm system.

9. Method for controlling and/or regulating building systems engineering on the basis of sensor-detected measured values in a system, wherein the system comprises a mobile device (3), at least one stationary sensor unit (14.1, 14.2, 14.3), and a data processing unit (16),
wherein the mobile device (3), the at least one sensor unit (14.1, 14.2, 14.3), and the data processing unit (16) are connected via at least one communication network (15), and the method
in a detection step, the mobile device (3) having at least one sensor (5) detects one or more measured values, and
in a signal generation step, the data processing unit (16) generates a control and regulation signal for the building systems engineering on the basis of a combination of information about the detected measured values of the sensor (5) and of the at least one stationary sensor unit (14.1, 14.2, 14.3), and wherein the method determines a reference position by means of at least one device for determining the position of the mobile device (3), and
**characterized in that**
the method executes a calibration of the sensor (5) of the mobile device, on the basis of the combination of information about the detected measured values of the sensor (5) and of the stationary sensor unit (14.1, 14.2, 14.3), via the data processing unit (16) and/or the mobile device (3).

## Revendications

1. Système de commande et/ou de régulation de la technique des systèmes de bâtiments sur la base de valeurs de mesure détectées par capteur, comprenant un dispositif mobile (3), au moins une unité de capteur stationnaire (14.1, 14.2, 14.3) et une unité de traitement de données (16),
le dispositif mobile (3), l'au moins une unité de capteur stationnaire (14.1, 14.2, 14.3) et l'unité de traitement de données étant connectés par le biais d'au moins un réseau de communication (15),
le dispositif mobile (3) comportant au moins un capteur (5) destiné à détecter une valeur de mesure et
l'unité de traitement de données (16) étant configurée pour produire un signal de commande et de régulation pour la technique des systèmes de bâtiments sur la base d'une combinaison d'informations sur les valeurs de mesure détectées de l'au moins un capteur (5) et de l'au moins une unité de capteur stationnaire (14.1, 14.2, 14.3) et
le système disposant d'au moins un dispositif, qui est conçu pour définir une position de référence pour une détermination de la position du dispositif mobile (3) et
**caractérisé en ce que**
l'unité de traitement de données (16) et/ou le dispositif mobile (3) sont configurés pour exécuter un étalonnage du capteur (5) du dispositif mobile sur la base de la combinaison d'informations sur les valeurs de mesure détectées du capteur (5) et de l'unité de capteur stationnaire (14.1, 14.2, 14.3).

2. Système de commande et/ou de régulation de la technique des systèmes de bâtiments selon la revendication 1,
**caractérisé en ce que**
l'au moins une unité de capteur stationnaire (14.1, 14.2, 14.3) est configurée pour reconnaître la présence d'une personne dans au moins une zone de détection (26) au moyen d'une mesure d'un paramètre physique et de la communiquer à l'unité de traitement de données (16) dans un signal de capteur.

3. Système de commande et/ou de régulation de la technique des systèmes de bâtiments selon une quelconque des revendications 1 et 2,
**caractérisé en ce que**
le dispositif mobile (3) est configuré pour communiquer l'information du capteur (5)
et/ou l'information prétraitée sur la valeur de mesure détectée du capteur (5) dans un signal de données à l'unité de traitement de données (16) et l'unité de traitement de données (16) fait partie de la technique des systèmes de bâtiments.

4. Système de commande et/ou de régulation de la technique des systèmes de bâtiments selon une quelconque des revendications 1 à 3,
**caractérisé en ce que**
le système dispose de plusieurs unités de capteur stationnaires (14.1, 14.2, 14.3) réparties et la détection des valeurs de mesure est effectuée avec une résolution spatiale.

5. Système de commande et/ou de régulation de la technique des systèmes de bâtiments selon une quelconque des revendications 1 à 4,
**caractérisé en ce que**
le dispositif mobile (3) comporte au moins un capteur (5), qui est réalisé sous la forme d'un
capteur de mouvement, en particulier un capteur d'accélération, un capteur gyroscopique, un capteur de gravité, un capteur de rotation,
capteur de position, en particulier un récepteur de système de navigation par satellite, un capteur de compas, un capteur de proximité, un capteur d'orientation,
capteur d'environnement, en particulier un capteur de pression, un capteur de luminosité, un capteur d'humidité atmosphérique, un capteur de température,
microphone,
capteur de caméra,
ou capteur sans fil.

6. Système de commande et/ou de régulation de la technique des systèmes de bâtiments selon une quelconque des revendications 1 à 5,
**caractérisé en ce que**
l'au moins une unité de capteur stationnaire (14.1, 14.2, 14.3) comprend au moins un capteur de présence, un capteur de mouvement, un capteur de luminosité, un microphone, un capteur de caméra ou un capteur de température.

7. Système de commande et/ou de régulation de la technique des systèmes de bâtiments selon une quelconque des revendications 1 à 6,
**caractérisé en ce que**
l'unité de traitement de données (16) est configurée pour générer une information de position concernant la position du dispositif mobile (3) sur la base de la combinaison d'informations sur les valeurs de mesure détectées du capteur (5) et de l'unité de capteur stationnaire (14.1, 14.2, 14.3).

8. Système de commande et/ou de régulation de la technique des systèmes de bâtiments selon une quelconque des revendications 1 à 7,
**caractérisé en ce que**
l'unité de traitement de données (16) est configurée pour commander, par le signal de commande et de régulation, une ou plusieurs unités de l'infrastructure du bâtiment (13.1, 13.2, 13.3, 13.4), en particulier une ou plusieurs lampes, une installation de ventilation, une installation de chauffage, une installation de climatisation, une installation d'alarme, une installation de détection d'incendie.

9. Procédé de commande et/ou de régulation de la technique des systèmes de bâtiments sur la base de valeurs de mesure détectées par des capteurs dans un système, le système comprenant un dispositif mobile (3), au moins une unité de capteur stationnaire (14.1, 14.2, 14.3) et une unité de traitement de données (16),
le dispositif mobile (3), l'au moins une unité de capteur (14.1, 14.2, 14.3) et l'unité de traitement de données (16) étant connectés par le biais d'au moins un réseau de communication (15) et le procédé
dans une étape de détection, le dispositif mobile (3) détectant une ou plusieurs valeurs de mesure au moyen d'au moins un capteur (5) et
dans une étape de production de signal, l'unité de traitement de données (16) produisant un signal de commande et de régulation pour la technique des systèmes de bâtiments sur la base d'une combinaison d'informations sur les valeurs de mesure détectées du capteur (5) et de l'au moins une unité de capteur stationnaire (14.1, 14.2, 14.3) et le procédé définissant une position de référence pour une détermination de la position du dispositif mobile (3) au moyen d'au moins un dispositif et
**caractérisé en ce que**
le procédé exécute un étalonnage du capteur (5) du dispositif mobile sur la base de la combinaison d'informations sur les valeurs de mesure détectées du capteur (5) et de l'unité de capteur stationnaire (14.1, 14.2, 14.3) par l'unité de traitement de données (16) et/ou le dispositif mobile (3).
